# EUROPÄISCHE PATENTSCHRIFT

(11) **EP 0 961 664 B1**
(45) Veröffentlichungstag und Bekanntmachung des Hinweises auf die Patenterteilung: **19.02.2003**
(21) Anmeldenummer: 97951844.6
(22) Anmeldetag: 10.12.1997
(51) Int. Cl.: B21D 53/26, B21D 22/14

(54) **VERFAHREN ZUR SPANLOSEN HERSTELLUNG EINES EINE NABE AUFWEISENDEN GETRIEBETEILES**
METHOD FOR PRODUCING WITHOUT CUTTING A GEAR PART HAVING A HUB
PROCEDE DE PRODUCTION SANS ENLEVEMENT DE COPEAUX D'UN MOYEU D'ELEMENT DE COMMANDE

(30) Priorität: 19.02.1997 DE 19706466
(43) Veröffentlichungstag der Anmeldung: 08.12.1999
(73) Patentinhaber: WF-MASCHINENBAU UND BLECHFORMTECHNIK GMBH & CO. KG, D-48324 Sendenhorst (DE)
(72) Erfinder: FRIESE, Udo, D-59227 Ahlen (DE)
(74) Vertreter: Stracke, Alexander
(86) Internationale Anmeldenummer: DE9702888
(87) Internationale Veröffentlichungsnummer: WO98036858

(56) Entgegenhaltungen:
- EP-A- 0 725 693
- DE-A- 4 115 423
- DE-A- 19 513 634
- DE-C- 975 677
- DE-C- 4 444 526
- US-A- 2 379 584
- US-A- 4 041 746

## Beschreibung

Die Erfindung bezieht sich auf ein Verfahren zur spanlosen Herstellung eines eine Nabe aufweisenden rotationssymmetrischen Getriebeteiles gemäß dem Oberbegriff des Hauptanspruches.

Ein gattungsbildendes Verfahren bzw. Vorrichtung werden in der EP 725 693 B1 beschrieben. Aus dieser Literaturstelle ist ein Drückverfahren zur spanlosen Herstellung einer Nabe eines die Nabe aufweisenden Getriebeteiles bekanntgeworden, bei welcher eine Blechplatine an einer Hauptspindel über einen Werkzeugstift festgelegt wird, der von einem Vorsetzer getragen wird. Der Werkzeugstift schafft dabei einen Aufnahmeraum, in den bei der Verformung der Blechplatine durch Drücken des Materials in diesen Aufnahmeraum das Material einfließen kann. Hierdurch wird die Fertigung einer Nabe eines aus einer Ronde oder einer Blechplatine bestehenden Getriebeteiles möglich, wobei die Materialgefügeveränderungen möglichst gering gehalten sind und außerdem dem Anwender die Möglichkeit gegeben wird, die Wanddicke des Getriebeteiles ausgehend von gleicher Rondenstärke beliebig zu wählen. Durch dieses Verfahren wird ein geringerer Maschineneinsatz erreicht und der Nabeninnendurchmesser kann durch das Druckverfahren ohne nachträgliches Rollieren hergestellt werden. Weiterhin bestehen keine Nachteile beim Profilieren einer Riemenscheibe durch vorherige Arbeitsgänge und es besteht außerdem die Möglichkeit, Nuten oder Verzahnungen am Nabeninnendurchmesser durch das Druckverfahren ohne Nachbearbeitung herzustellen

Viele, insbesondere im Kraftfahrzeugbau eingebaute Getriebeteile sind im Stand der Technik zweiteilig ausgebildet und müssen entweder gelötet oder geschweißt werden und außerdem ist eine zusätzliche Bearbeitung erforderlich Solche Getriebeteile werden als Poly-V-Scheiben ausgebildet oder weisen eine Geberverzahnung auf.

Der Erfindung liegt die Aufgabe zugrunde ein einteilig ausgebildetes und aus einer Blechplatine oder einem Vorzug gefertigtes Getriebeteil zu schaffen, das zusätzlich zur angeformten Nabe einen oder mehrere Stufenkörper aufweist, d. h Körper. die z. B mit Zähnen oder Rillen versehen sein können und weitere Getriebeteile bedienen. Diese Stufenkorper erstrecken sich koaxial zur Nabe.

Diese der Erfindung zugrundeliegende Aufgabe wird durch die Lehre der Hauptansprüche gelöst.

Vorteilhafte Ausgestaltungen sind in den Unteransprüchen erläutert.

Mit anderen Worten ausgedrückt wird bei dem erfindungsgemäßen Verfahren so vorgegangen wie im Stand der Technik, d. h. es wird in einem Drückverfahren aus einer Blechplatine oder einem Vorzug zuerst eine Nabe geformt. Hierbei setzt die Drückrolle nicht am äußeren Rand der Blechplatine an, sondern beaufschlagt nur einen Teil der Fläche der Blechplatine, d. h. setzt beispielsweise von der Mittenbohrung der Blechplatine aus gesehen in der halben radialen Länge der Blechplatine an. Anschließend wird dieses Halbfabrikat aus der Maschine entnommen, um 180° gedreht und wiederum an einer Hauptspindel angesetzt, die mit einem entsprechenden Aufnahmeraum für die Nabe und ggf. einer Anschlagkante ausgerüstet ist. Dann wird ausgehend vom Außenumfang der Blechplatine oder des Vorzuges durch eine Drückrolle ein erster Stufenkörper geformt, der in einen entsprechend ausgebildeten Aufnahmeraum am Vorsetzer einfließen kann. Hierbei ist dieser Stufenkorper koaxial zur Nabe ausgerichtet, aber erstreckt sich entgegengesetzt der Richtung der Nabenerstreckung.

Anschließend kann ein zweiter Stufenkörper aus dem verbleibenden Teil der Blechplatine geformt werden oder - wenn es sich um einen Vorzug handelt - besteht dieser zweite Stufenkörper schon, weist dann aber eine Wandstärke auf, die gleich der Wandstärke des Ausgangswerkstückes ist. In die Stufenkorper können dann die für ein Getriebeteil gewünschten Profilierungen eingearbeitet werden, beispielsweise Rillen oder Verzahnungen

Anstelle des Umdrehens des Halbfabrikates kann auch so vorgegangen werden, daß durch entsprechende Ausbildung der Hauptspindel z. B. durch Wegnahme von Einsatzstücken od. dgl. nunmehr die Rückseite der Blechplatine oder des Vorzuges durch Druckrollen bearbeitet werden kann.

Ein Ausführungsbeispiel der Erfindung wird nachfolgend anhand der Zeichnung erläutert. Die Zeichnung zeigt dabei in
- Fig. 1: in einer auseinandergezogenen Darstellungsweise die einzelnen Bauteile, in
- Fig. 2: den Verfahrensschritt der Herstellung der Nabe, in
- Fig. 3: das auf einer anderen Hauptspindel angeordnete, umgedrehte Werkstück und den durch eine Drückrolle teilweise gefertigten ersten Stufenkörper, in
- Fig. 4: das gefertigte Rohbauteil und in
- Fig. 5: ein fertiges Getriebeteil.

In der Zeichnung ist mit 1 eine Blechplatine bezeichnet, die bei dem dargestellten Ausführungsbeispiel über einen Werkzeugstift 4 eines Vorsetzers 5 an einer Hauptspindel 2 festlegbar ist

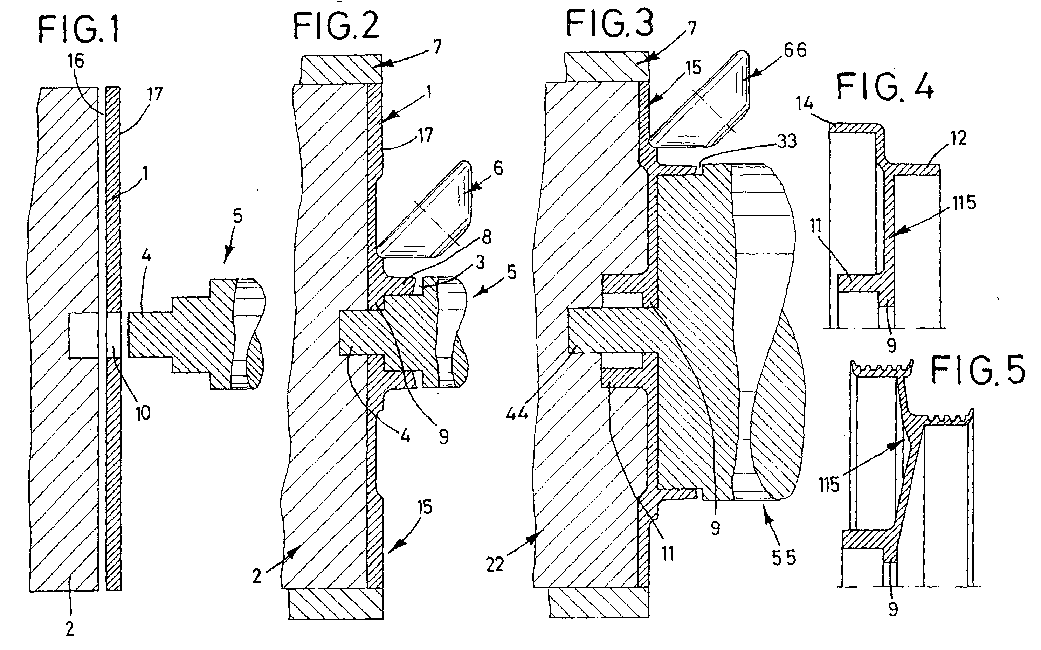

Aus Fig. 2 ist erkennbar, daß die Blechplatine 1 über ein Widerlagerfutter 7 in ihrer Lage gesichert wird, wobei bei der Durchführung des Drückverfahrens ein Auswandern der Blechplatine 1 über den Ausgangsdurchmesser der Blechplatine verhindert wird.

Sollte von einem Vorzug ausgegangen werden, ist der äußere Rand der Blechplatine z. B umgebogen, erstreckt sich über einen Teil der Hauptspindel 2 und wird ebenfalls über ein Widerlagerfutter festgelegt. Die Blechplatine oder auch der Vorzug weisen eine zentrische Mittelbohrung 10 auf, die von dem Werkzeugstift 4 gemäß Fig. 2 oder dem Werkzeugstift 44 gemäß Fig. 3 durchgriffen wird. In Fig. 1 ist weiterhin die Vorderseite der Blechplatine 1 mit 17 und die Ruckseite der Blechplatine 1 mit 16 bezeichnet

Bei 6 ist eine Drückrolle dargestellt. die auf das Zentrum, d. h. zur Mittelbohrung 10 hin, geführt werden kann.

Bei der Darstellung gemäß Fig. 2 ist die Blechplatine 1 an der Hauptspindel 2 festgelegt, die Drückrolle 6 hat - ausgehend von der halben radialen Länge der Blechplatine 1 - einen Teil ihres Weges beschrieben und Material 8 der Blechplatine 1 in einen Aufnahmeraum 3 geführt, der im Vorsetzer 5 ausgebildet ist. Außerdem weist der Werkzeugstift 4 zwei unterschiedliche Außendurchmesser auf, nämlich einmal einen größeren Außendurchmesser, durch den der Aufnahmeraum 3 geschaffen wird und einen kleineren Außendurchmesser, durch den der Werkzeugstift 4 bis in die Hauptspindel 2 reicht und der den engeren Randbereich der zentrischen Mittelbohrung 10 an der Hauptspindel 2 festlegt. Hierdurch wird in der später gebildeten Nabe 11 eine Anschlagkante 9 geschaffen, die der Festlegung des Getriebeteiles dienen kann, oder spanabhebend entfernt werden kann, um somit eine scharfkantige Ausbildung des rückwärtigen Randbereiches 16 der in Fig. 2 dargestellten Blechplatine im Bereich des Überganges von der Rückseite zur Innenseite der Nabe 11 zu erreichen.

Die nach dem Verfahrensgang gemäß Fig 2 hergestellte Nabe ist in Fig. 3 und in Fig. 4 und 5 erkennbar und trägt das Bezugszeichen 11.

Nach Durchführung des in Fig 2 dargestellten Verfahrensschrittes wird das Werkstück 15 umgedreht an eine weitere Hauptspindel 22 angesetzt, durch ein Widerlagerfutter 7 und einen Vorsetzer 55 festgelegt, wobei dieser Vorsetzer 55 ebenfalls einen Werkzeugstift 44 aufweist, der in die Hauptspindel 22 eingreift. Eine Drückrolle 66 führt nunmehr beginnend am Außenrand des Werkstückes 15 am Werkstoff in einen Aufnahmeraum 33 des Vorsetzers 55 und bildet so einen ersten Stufenkorper 12

Nach Abnahme des Werkstückes 15 kann nunmehr der äußere Randbereich des Werkstückes 15 zu einem zweiten Stufenkörper 14 abgebogen werden, so wie dies in Fig. 4 dargestellt ist. Wesentlich dabei ist, daß die Wirkungsweise der ersten Drückrolle 6 nicht am Außenrand der Blechplatine beginnt, sondern in einem mittleren Bereich, so daß zur Herstellung des ersten Stufenkörpers 12 der äußere Randbereich der Blechplatine 1 immer noch die gleiche Ausgangsstärke aufweist, wie in Fig. 1.

Es ist aus dieser Verfahrensbeschreibung ersichtlich, daß die Wandstärke des Werkstückes 15, die Wandstärke des ersten Stufenkörpers 12 und die Wandstärke des zweiten Stufenkörpers 14 ebenso wie die Wandstärke der Nabe 11 von Werkstück zu Werkstück variiert werden kann, so daß beispielsweise die Nabe 11 eine wesentlich größere Wandstärke als die Wandstärke des Werkstückes 15 oder der Stufenkörper 12, 14 aufweisen kann.

Aus der Darstellung in Fig. 5 ist erkennbar, daß nunmehr in die Stufenkörper 12 und 14 dem endgültigen Getriebeteil entsprechende Profilierungen eingearbeitet werden können, daß weiterhin der Wurzelbereich 116 des Stufenkörpers 12 verdickt sein kann und daß schließlich auch gegenüber der Achse der Nabe 11 die Stufenkörper 12 und 14 Neigungen ungleich 90° aufweisen können

## Patentansprüche

1. Verfahren zur spanlosen Herstellung eines eine Nabe (11) aufweisenden, rotationssymmetrischen Getriebeteiles aus einer eine zentrische Mittelbohrung (10) aufweisenden, von einer Hauptspindel (2) getragenen und relativ zu einer oder mehreren Drückrollen (6) rotierend angetriebenen Blechplatine oder Vorzug, bei der durch Drücken mittels einer oder mehrerer Drückrollen (6) die Dicke verringert und zu einem von dem Werkstück vorstehenden zylindrischen Vorsprung in einem Aufnahmeraum (3) um einen das Werkstück durchdringenden Werkzeugstift (4) verformt wird, **dadurch gekennzeichnet, daß** der werkzeugstift am Vorsetzer angeordnet ist und daß zur Herstellung der Nabe (11) nur ein Teil der Fläche der die Nabe (11) aufweisenden Vorderseite (17) von der Drückrolle (6) beaufschlagt und das so gewonnene Material in den Aufnahmeraum (3) eingelegt wird und
daß nach Ausbilden der Nabe (11), das hergestellte Werkstück (15) mit seiner Vorderseite (17) an eine weitere Hauptspindel (22) angesetzt und durch einen weiteren, einen Aufnahmeraum (33) aufweisenden Vorsetzer (55) festgelegt wird, durch Drücken mittels einer oder mehreren Drückrollen (66) die Dicke der Rückseite (16) der nichtbearbeiteten Fläche des Werkstückes (15) verringert und zu einem konzentrisch zur Nabe (11) ausgebildeten ersten Stufenkörper (12) des Werkstückes (15) in den Aufnahmeraum (33) des Vorsetzers (55) verformt wird, wobei ein Stufenkörper (12) anschließend zur Bedienung von Getriebeteilen bearbeitet wird.

2. Verfahren nach Anspruch 1, **dadurch gekennzeichnet, daß** der äußere Randbereich des aus der Blechplatine oder dem Vorzug hergestellten Werkstückes (15) nach Herstellen des ersten Stufenkörpers (12) zu einem zweiten Stufenkörper (14) umgebogen wird.

3. Drückvorrichtung zur Durchführung des Verfahrens nach Anspruch 1, mit einer Hauptspindel (2), einer oder mehreren Drückrollen (6), einem Vorsetzer (5) mit einem Aufnahmeraum (3) um einen Werkzeugstift (4), der durch eine Mittenöffnung (10) einer Blechplatine (1) oder eines Vorzuges führbar ist, **dadurch gekennzeichnet, daß** eine weitere Hauptspindel (22) und ein weiterer, einen Aufnahmeraum (33) aufweisender Werkzeugstift, ein weiterer Vorsetzer (55) sowie weitere Drückrollen (66) vorgesehen sind und daß, der Durchmesser eines mit dem Vorsetzer (5, 55) verbundenen Werkzeugstiftes (4, 44) im Bereich des Aufnahmeraumes (3, 33) größer ist als in dem durch die Durchdringung der Blechplatine (1) oder des Vorzuges und Eingreifen in die Hauptspindel (2, 22) definierten Bereich.

## Claims

1. Method of producing, without cutting, a rotationally symmetrical gear part, which has a hub (11), from a steel sheet billet or a first draw, which has a central middle bore (10) and which is carried by a main spindle (2) and rotationally driven relative to one or more presser rollers (6), in which the thickness is reduced by pressing by means of one or more presser rollers (6) and is deformed into a cylindrical projection, which protrudes from the workpiece, in a receiving space (3) around a tool spigot (4) penetrating the workpiece, **characterised in that** the tool spigot is arranged at the presenting means and that for production of the hub (11) only a part of the surface of the front side (17), which has the hub (11), is loaded by the presser roller (6) and the thus-obtained material is introduced into the receiving space (3) and that after formation of the hub (11) the produced workpiece (15) is placed by its front side (17) on a further main spindle (22) and fixed by a further presenting means (55) having a receiving space (33), the thickness of the rear side (16) of the unprocessed surface of the workpiece (15) is reduced by pressing by means of one or more presser rollers (66) and is deformed into a first step body (12), which is formed concentrically with the hub (11), of the workpiece (15) in the receiving space (33) of the presenting means (55), wherein a step body (12) is subsequently machined for serving as gear parts.

2. Method according to claim 1, **characterised in that** the outer region of the workpiece (15) produced from the steel sheet billet or the first draw is, after production of the first step body (12), bent around into a second step body (14).

3. Pressure device for carrying out the method according to claim 1, with a main spindle (2), one or more presser rollers (6), a presenting means (5) with a receiving space (3) around a tool spigot (4), which can be guided through a middle opening (10) of a steel sheet billet (1) or a first draw, **characterised in that** a further main spindle (22) and a further tool spigot, which has a receiving space (33), a further presenting means (55) as well as further presser rollers (56) are provided and that the diameter of a tool spigot (4, 44) connected with the presenting means (5, 55) is larger in the region of the receiving space (3, 33) than in the region defined by the penetration of the steel sheet billet (1) or of the first draw and engagement in the main spindle (2, 22).

## Revendications

1. Procédé de fabrication par enlèvement de copeaux d'un élément de transmission à symétrie de révolution comportant un moyeu (11), à partir d'un disque de tôle ou pièce pré-emboutie présentant un trou central (10) centré, supporté par une broche principale (2) et entraîné en rotation par rapport à un ou plusieurs rouleaux de pression (6), dont on réduit l'épaisseur par pression, au moyen d'un ou de plusieurs rouleaux de pression (6), et on le déforme en une saillie cylindrique, dépassant de la pièce, dans un logement (3), autour d'un broche d'outil (4) traversant la pièce, **caractérisé en ce que** la broche d'outil est disposée sur le dispositif d'avance, pour la fabrication du moyeu (11), une partie seulement de la surface de la face avant (17) comportant le moyeu (11) est soumise à l'action du rouleau de pression (6) et la matière ainsi obtenue est amenée dans le logement (3), et **en ce qu'**après réalisation du moyeu (11), la pièce (15) est placée, par sa face avant (17), contre une autre broche principale (22) et est fixée par un autre dispositif d'avance (55) comportant un logement (33), par pression d'au moins un ou plusieurs rouleaux de pression (66), l'épaisseur de la face arrière (16) de la surface non travaillée de la pièce (15) est réduite et est déformée, dans le logement (33) du dispositif d'avance (55), en un premier corps étagé (12) de la pièce (15), réalisé concentriquement au moyeu (11), un corps étagé (12) étant ensuite formé pour manoeuvrer des éléments de transmission.

2. Procédé selon la revendication 1, **caractérisé en ce que** la zone de bordure extérieure de la pièce (15) fabriquée à partir du disque de tôle ou de la pièce pré-emboutie est repliée en un deuxième corps étagé (15), après réalisation du premier corps étagé (12).

3. Dispositif de pression pour la mise en oeuvre du procédé selon la revendication 1, comportant une broche principale (2), un ou plusieurs rouleaux de pression (6), un dispositif d'avance (5) avec un logement (3) autour d'une broche d'outil (4) qui peut être guidée à travers une ouverture centrale (10) d'un disque en tôle (11) ou d'une pièce pré-emboutie, **caractérisé en ce que** sont prévues une autre broche principale (22) et une autre broche d'outil comportant un logement (33), un autre dispositif d'avance (55) ainsi que d'autres rouleaux de pression (66), et **en ce que** le diamètre d'une broche d'outil (4, 44) reliée au dispositif d'avance (5, 55) est plus grand dans la zone du logement (3, 33) que dans la zone définie par la pénétration du disque de tôle (1) ou de la pièce pré-emboutie et l'engagement dans la broche principale (2, 22).
